Europäisches Patentamt

European Patent Office

Office européen des brevets

(11) Publication number: **0 232 275**

**B1**

(12) **EUROPEAN PATENT SPECIFICATION**

(45) Date of publication of patent specification: 21.03.90

(51) Int. Cl.⁵: **C 08 F 257/02, G 03 G 9/08**

(21) Application number: **85905546.9**

(22) Date of filing: **30.10.85**

(86) International application number:
**PCT/SE85/00426**

(87) International publication number:
**WO 86/03208 05.06.86 Gazette 86/12**

(54) **A METHOD FOR THE PRODUCTION OF TONER PARTICLES FOR REPROGRAPHIC APPLICATIONS.**

(30) Priority: **22.11.84 SE 8405898**

(43) Date of publication of application:
**19.08.87 Bulletin 87/34**

(45) Publication of the grant of the patent:
**21.03.90 Bulletin 90/12**

(84) Designated Contracting States:
**DE FR GB IT SE**

(56) References cited:
**DE-A-3 433 191**
**SE-B-4 297 600**

**Patent Abstracts of Japan; abstract of JP
59-61843, published 1984-04-09**

**Patent Abstracts of Japan, abstract of JP
59-65855, published 1984-04-14**

**Patent Abstracts of Japan, abstract of JP
59-67554, published 1984-04-17**

(73) Proprietor: **Casco Nobel AB
Box 11550
S-100 61 Stockholm (SE)**

(72) Inventor: **PORRVIK, Sten
Linjevägen 18
S-852 59 Sundsvall (SE)**
Inventor: **MATTSON, Gunnar
Härbrevägen 11
S-860 20 Njurunda (SE)**
Inventor: **SUNDSTRÖM, Göran
Batmansvägen 27
S-852 43 Sundsvall (SE)**
Inventor: **TANNER, Olle
Linjevägen 21
S-852 59 Sundsvall (SE)**

(74) Representative: **Schöld, Zaid
Nobel Industries Sweden AB Patent Department
Box 11554
S-100 61 Stockholm (SE)**

Courier Press, Leamington Spa, England.

## Description

### Technical field

The present invention relates to a method for the production of toner particles for reprographic applications wherein polymeric base particles are covered with a shell containing a colorant and a polymer.

### Background of the invention

Particles for use as toners in reprographic methods must fulfil several requirements in order to function in the intended manner. The particles must be sufficiently hard or they will break down by abrasion during the treatment in the apparatus and also to prevent caking at ordinary operation conditions. On the other hand, the particles must have a sufficiently low melting point to be fixed to the support by conventional methods such as rolling or heating. The particles must have suitable magnetic or electrical properties, and hereby it is of particular importance that the surface is capable of accepting and retaining the required charge and especially in cases where the charge is obtained by rubbing against other materials the surface must have stable triboelectrical properties. However, the surface must not be hygroscopic so that water is retained as this can result in caking of the particles or in a change of the electrical properties. The material of the particles must be resistant to aging and it must be possible to incorporate a colorant which is resistant to aging. The particles should also have as uniform and spherical form as possible to increase the abrasion resistance, to prevent the particles from being fixed to undesired spots on the charged surface and to make it possible to have a higher charge and a charge which is more uniformly distributed between the different particles. The particles should also have as uniform size distribution as possible as variations in size lead to variations in the capability of accepting the charge and thus a non-uniform deposition on the accepting surface so that the resolution becomes limited.

Known toner materials have only fulfilled the above mentioned requirements to a limited extent. The conventional method of preparation, i.e. the incorporation of a colorant, charge-modifying agents etc. in a plastic mass followed by grinding and screening of the product, certainly makes it possible to choose the material and the additives fairly freely but the obtained particles are of very varying shapes and have a very non-uniform size distribution and this results in a poor abrasion resistance, poor resolution and difficulties in removing particles, particularly the smaller ones, from undesired spots on the surface. Alternative methods for the production of toner particles have been suggested and these have given particles of a more rounded form, but these known methods have not given the desired narrow particle size distribution and they have decreased the freedom of choice with regard to material and they have made the incorporation of additives more difficult.

In the British patent application 2112538 it is described how advantages can be gained at the production of toner particles by first preparing the base particles and then add a colorant and optionally other additives in the form of a shell on the base particles. The base particles can here be prepared with desired properties independent of the process of colouring, the colorant gets a suitable distribution with regard to light absorption and the covering can be made without any considerable effect on the spherical form or size distribution of the base particles.

One problem with the coating with a shell is that the concentration of the colorant in the shell will be high and this can influence among other things the electrical properties of the surface and increase the risk that pigment particles will come loose at abrasion. A certain precision at the shell coating might also be required to avoid agglomeration.

In JP 59—61843 toner particles are manufactured by suspension polymerization. A mixture of pigment, a monomer, a polymerization initiator and magnetic material powder is suspension polymerized in water. A monomer of styrene or the like added with the polymerization initiator is polymerized under the dropwise addition thereof.

In JP 59—65855 magnetic toner particles are prepared by coagulating a $NH_3$ solution of an ethyl acrylate-acrylic acid copolymer or the like around a nuclei of magnetite. A styrene monomer containing a polymerization catalyst is added and polymerized.

### The invention generally

The main object of the present invention is to make a shell coating possible according to which the above mentioned disadvantages are avoided. It is a particular object of the invention to efficiently bind and distribute the colorant in the shell so that the surface properties are not negatively influenced and so that stable particles are obtained. A further object of the invention is to make a simple shell coating technique with a low risk of agglomeration possible.

The above objects are achieved by the features evident from the appended claims.

As the colorant is applied to a polymeric base particle core the mentioned advantages of a shell coating technique are maintained. As a monomer, which is later polymerized, is also supplied to the shell a good anchorage of the colorant in the shell is ensured. In contrast to other binding agents for the shell the monomer can be made to penetrate the base particle somewhat which gives a good binding of the shell to the core. As the core has a limited swellability or a limited solubility in the monomer the monomer will, however, to the main part be oriented to the shell and secure a good binding and a good incorporation of the colorant. These desirable factors are balanced against each other by selection of degree of cross-linking or degree of solubility. The low-viscous monomer phase is uniformly distributed over the surface of the base particles already at low temperatures and this contributes to maintaining, or even increasing, the spherical form of the treated particle. A supply of monomer through a water based dispersion phase for the particles gives a good control of the supplied amount of monomer and contributes to maintaining the size distribution of the base particles. It is easy to avoid agglomeration as the monomer addition can be carried out without being hindered by the prsence of surface active stabilisers for the particles in the aqueous phase.

Further objects and advantages of the invention will be evident from the detailed description below.

Detailed description of the invention

In principle, the coating technique according to the invention can be applied to very varying types of base particles. Generally, base particles of organic material are preferred and the organic material can comprise thermosetting resins and waxes, for example to form a capsule with soft contents which can be fixed to a paper by pressing to crushing. Thermoplastics are particularly preferred, among other things as they can be produced with different properties for different purposes and as the shell, according to what has been stated earlier, can be made to adhere well to these materials. Among suitable monomers for the thermoplastic materials can be mentioned styrene, vinyl chloride, vinylidene chloride, acrylo nitrile and acrylates, such as methylacrylate and ethylacrylate. Mixtures of different monomers can also be used. Particularly suitable monomers are styrene, styrene-acryl, styrene-acrylo nitrile-acryl or vinylidene chloride-acrylo nitrile.

As has been mentioned, the choice of material ·for the base particle is made with regard to the fact that it must not be too swellable or soluble in the later added monomer. One way of achieving this is to cross-link the base particle by incorporating a monomer with more than one bond forming function such as divinyl benzene, polyfunctional acrylates, diallyl phthalate etc. A high amount of such polyfunctional addition monomers in the total monomer amount, e.g. more than 30% active content, gives highly cross-linked particles which do not permit any monomer penetration worth mentioning. A low content, e.g. below 1%, gives particles which will absorb too much of the later added monomer. Between 3 and 20% can be a suitable interval, but it can vary depending on the types of monomer which are admixed. An alternative way of limiting the monomer absorption is to choose components for the base particles which are difficultly soluble. Polyacrylonitrile is for example difficultly soluble in later added styrene monomer.

A suitable size of toner particles according to the invention is between 1 and 50 μm, particularly between 2 and 25 μm and preferably between 4 and 15 μm. The base particles should thus have such a size that they after the coating have a size within these ranges.

Although the invention is not limited to any particular size distribution of the base particles it is preferred that they have a narrow size distribution. The coefficient of variation for the particles (standard deviation × 100/mean diameter) is suitably below 75, preferably below 50 and most preferably below 30.

The coating technique according to the invention can be used independent of the shape of the base particles but it is preferred that the base particles are spherical.

Particles below 1 micron which have the same size and are spherical can be produced by conventional emulsion polymerization if small amounts of tensides are used and persulfate is used as initiator. It is more difficult to produce larger particles of the same size but a couple of methods have been described, e.g. Ugelstad European patent 3905 or Barret: Dispersion Polymerization in Organic Media p. 137, Lehigh University: Graduate Research Progress Reports No 20, July 1983. However, for both mentioned methods the base processes do not allow coloring of the particles, either with organic or inorganic colorants. For reprographic purposes it is, however, usually necessary that the particles are coloured.

Particles prepared according to the method described in the European Patent specification 3905 are particularly suitable as base particles according to the present invention as spherical particles with a narrow molecular weight distribution, e.g. with coefficients of variation below 30, also below 10 or below 5 per cent, can be obtained according to this known method.

This method comprises the preparation of an aqueous dispersion of monodisperse seed particles having a mean diameter below about 3 μm, which, in addition to polymer, contains a fairly low-molecular substance which is difficultly soluble in water but can be absorbed by the polymer, e.g. as described below, addition of a monomer which is less difficultly soluble in water than the difficultly soluble substance but which is capable of being absorbed by the seed particles containing the difficultly soluble substance under conditions which permit molecular migration of the monomer to the particles and absorption therein, and polymerization of the monomer particles. The thus obtained particles are suitable as base particles for the toner of the present invention.

When the base particles have been prepared, for example according to any of the mentioned methods, it might be suitable, depending on the system of surface active agents that have been used, to wash away rests of emulsifiers from the surfaces of the core particles of uniform size before the subsequent treatment is carried out. However, if for example a fatty acid soap or metal hydroxides have been used as colloidal stabilisers it is not necesssary to wash the particles before the following treatment. A lowering of the pH might here be sufficient.

The colorant can be a molecularly soluble substance, for example an organic colorant, but it is preferred to use pigments, and particularly inorganic pigments, to get the best long term durability, and then particularly carbon black or magnetite in those cases wherein magnetic particles are of importance. For pigments the volume amount, based on the volume of the entire particle, should be between 0.5 and 50 per cent, particularly between 1 and 25 per cent. When the colorant is incorporated essentially in the shell the amount based on the volume of the shell should be between 2 and 60 per cent and preferably between 5 and 40 per cent. The used pigments should have a particle size which is clearly below that of the base particles, for example below 1 μm and preferably below 0.3 μm. For soluble organic dyes the amount is more easily calculated on basis of the weight and in these cases the above given numerical values can instead be used as per cent by weight values.

The coating of the base particles with a colorant can be made either in a dry state or in a liquid phase. In the first case dried base particles are mixed with pigment. To obtain an even distribution of the pigment the powder should be subjected to shearing forces during the mixing. If the coating is carried out in a liquid — preferably water — a dispersion of the pigment and an adhesive liquid is mixed with the core particles of uniform size and the addition hereby makes for the surface of the core particles. By selecting suitable shearing forces it is then possible to get a uniform distribution on the core particles.

In connection with this different measures can be taken to facilitate the absorption of the colorant on the surface of the base particle. The surface can be softened by the addition of a solvent or by increasing the temperature. In aqueous phase flocculation can be facilitated by flocculating the stabiliser systems. The cores can also be made to have a structured composition with an outer part which is less cross-linked than the main part of the core particle. In this manner it is possible to obtain core particles with very little swelling but where it nevertheless is easy to make a pigment layer become fixed to the surface.

Good results have been obtained by addition of an adhesive agent together with the colorant. The most varying substances can be used as adhesive liquid, for example alcohols, organic esters, aromatic or aliphatic hydrocarbons, different waxes with suitable melting points, etc.

When the monomer is added later by migration in a dispersion agent phase it is particularly suitable to use substances which are sparingly soluble as adhesive agents as these can facilitate the monomer migration to the coloured particles, even after that a separate monomer phase has been formed on these, and contribute to a good distribution of the colorant in the monomer. The solubility of the substance in water should be greater than that of the base particle but it should be below $10^{-2}$, preferably below $10^{-4}$ and most preferably below $10^{-5}$, g/l. The molecular weight should be below 5000 and preferably also below 500. The substance should preferably be organic for the best compatibility with other components and, for solubility reasons, it should be non-ionic. Hydrocarbons and substituted hydrocarbons can be used. Examples of substances are chlorododecane, dioctyl adipate, stearylmethacrylate or an initiator which is sparingly soluble such as dioctanoylperoxide. It can be particularly suitable to use very sparingly soluble monomers as the adhesive liquid. Besides the mentioned effect of swelling also the advantage that the substances are polymerised is hereby obtained and there will thus be no rests of adhesive liquid in the particles, which among other things can lead to exudation on the surfaces of the finished particles. It is also possible to use an oligomer as the substance which is difficultly soluble. The difficultly soluble substance should be a liquid under the conditions at addition and monomer migration.

The amount of adhesive liquid should be large enough for all the pigment to be picked up by the core particles but not so large that the core particles will agglomerate. The required amount can vary, for example depending on amount of pigment and the degree of retention of the adhesive liquid by the base particle. Suitably the amounts can be between 1 and 50 per cent and particularly between 5 and 25 per cent of the weight of the base particle.

To achieve an efficient mixing it has been found suitable to add coarser particles, for example glass beads, to the mixture of core particles and adhesive agent, particularly at dry blending methods. To improve the free-flowing properties of the powder mass these auxiliary particles should be considerably larger than the base particles, suitably between 10 and 100 times larger or for example about 0.5 to 5 mm. Better free-flowing properties are obtained with larger amounts of auxiliary particles but at the same time the production capacity decreases and it is thus suitable to keep the content of auxiliary particles between about 20 and 90 per cent by weight in the powder mass.

If correct conditions for the mixing have been selected the pigment will be quantitatively picked up on the surface of the core particles and no free pigment particles are visible at microscopy. For use in reprography it is, however, necessary that the pigment layer on the surface is protected by being mixed into a polymer layer or covered by a polymer layer. According to the invention a covering layer is produced by adding a monomer and initiator to the pigmented particles in such a manner that the monomer is included in the pigment layer or forms a circle surrounding this. The monomer is then polymerized and hereby a pigmented particle wherein the pigment layer is protected is obtained.

Suitable monomers for the shell are the same ones that have been listed as suitable for the base particles. It is, however, possible to choose different materials for the core and the shell. The monomer should among other things be selected with regard to desired softening properties. The shell shall normally not be cross-linked. When the toner particles are to be used in processes where adhesion is obtained by heating it is desirable that at least a part of the polymer content of the finished particle has a glass temperature ($T_g$) below 100°C, and preferably below 80°C. The glass temperature should suitably be above 30°C. Suitable hardness properties can also be influenced by the degree of poymerisation. When a substance which is difficultly soluble, as described above, is used to facilitate the monomer addition the monomer should be more soluble in water than the substance which is difficultly soluble, preferably at least 10 times and most preferably at least 100 times as soluble in water.

The shell monomer can be added in any manner which gives a good protection of the colorant. It is preferred to disperse the coated base particles in an aqueous liquid. Hereby dispersing agents, tensides, steric stabilisers, powder stabilisers, alcohols, ammonia etc. can be used. The dispersion is then mixed with the monomer, which subsequently can be made to migrate to the coloured base particles by means of conventional swelling technique used in polymerisation processes. If the base particles permit swelling the added monomer will first be absorbed in the cores and these will grow in size. The pigment layer will then still be on the surface of the particles. When more monomer, in addition to the amount which has been absorbed, is gradually added this additional monomer will form a separate external phase. If the monomer drops are smaller than the diameter of the monomer coated base particles the swelling can continue also without the addition of special auxiliary swelling agents. At the polymerisation the pigment layer is encapsulated. To obtain a good wetting of the entire particle surface so that a spheric monomer coating is obtained the surface of the particle is suitably prepared so that it has a surface tension which is suitable with regard to the monomer.

As has been mentioned, it is generally desirable that the colorant is encapsulated or covered by the added monomer and that it does not settle on the surface of the particle, neither before nor in connection with the polymerisation. The colorant should thus be soluble or dispersible in the monomer or have such a surface tension that it makes for the phase boundary surface between the base particle and the shell rather than for the surface of the shell. Organic colorants can thus advantageously be soluble or dispersible in monomer or polymer. To obtain the proper surface properties a surface coating can be required for pigments. The pigments can for example be coated with a hydrophobing substance to increase the compatibility of the particles with for example the polymer material in the shell or in the base particle. For this purpose a polymer coating can be used. For magnetite a silane coating is especially suitable as this makes the surface less sensitive to moisture, decreases the conductivity and gives good compatibility with other materials. Particularly after being cured the silane coating is not tacky and thus the risk of agglomeration is not increased. The amount of added silane can be between 0.1 and 10 per cent by weight and particularly between 0.5 and 5 per cent by weight.

A method of controlling the distribution of pigment in the shell which is generally usable is to pre-treat the pigments by direct polymerising of a layer of cross-linked polymer on their surfaces. Such a layer on the pigment particles secures a good wetting of the entire pigment coating on the base particles with monomer so that an essentially uniform and spheric monomer layer is obtained. A further improvement in the dispersibility of the pigments and reduction of the tendency to agglomeration is obtained if the monomers for the cross-linkable polymer on the pigment particles contain long side-branches, for example aliphatic chains with 10 to 20 carbon atoms, or long alcohols such as lauryl- or stearyl-alcohol esterified with the monomer as these branches will be oriented out from the pigment surface at the polymerisation. The coating can be carried out by mixing the pigment, the monomers and the initiator. Well-known coupling agents, such a silanes, can suitably be used to improve the adhesion between the pigment surface and the polymer. A suitable polymer content on the pigment is between 0.1 and 10 per cent.

The amount of monomer added to the shell shall be sufficient for firmly covering or containing the used amount of colorant. The volume amount of monomer should thus not be less than 0.1 times the volume of the base particle. If the base particle is highly cross-linked and thus difficult to melt at the fixation of the toner particle when it is used it can be necessary to add a larger amount of monomer to the shell, for example above 0.5 and preferably above 1 times the volume of the base particle. If the increase in radius of the shell is very large this can give rise to problems with agglomeration, influence the particle size distribution and give difficulties with the distribution of colorant. The shell should thus constitute less than 10 and preferably less than 5 times the volume of the base particle.

For the polymerisation it is preferred to use a monomer-soluble initiator and this can thus be added together with the monomer if it is sufficiently soluble in water to be able to migrate through the aqueous phase to the covered base particles. If the initiator is very hydrophobic it can advantageously be added directly to the base particle, suitably in connection with the addition of colorant, e.g. together with this or as adhesive agent.

Generally it will suffice to add the colorant once, followed by formation of shell, but if it is desired it is of course possible to repeat these steps. Hereby it might be necessary to choose a polymer for the inner shells which is difficultly soluble or which is cross-linked.

## Example 1

This example illustrates the preparation of monodisperse base particles.

77 ml water, 11.7 ml of chlorododecan, 1.8 g of benzoylperoxide, 9.3 ml of dichloroethane and 0.2 g of sodium laurylsulfate were homogenised in a two-step Manton Gaulin homogeniser, model 15 M, with 200 kg/cm² (20 MPa) in the first step and 80 kg/cm² (8 MPa) in the last step for about 1 to 1.5 minutes and this resulted in an emulsion with particles having a size in the order of 0.1 to 0.2 µm. A seed latex of monodisperse polystryene particles having a diameter of 0.65 µm (determined by electron microscopy) was added to the emulsion. The amount of seed latex added was 83.8 ml, containing 77 ml of water and 6.8 ml of stryene particles. Additionally 6 ml of water and 8.5 ml of acetone were added under agitation at 35 to 40°C. After agitation for 12 hours at 40°C the acetone was removed by evaporation under vacuum. When the acetone and the dichloroethane had been evaporated 1.0 g of sodium laurylsulfate and 840 ml of water were added so that the amount of water was 1000 ml. Further 275 ml of distilled styrene were added under agitation at 30°C. After agitation for 2 hours at 30°C the temperature was increased to 60°C and the polymerisation started. After 25 hours polymerisation a monodisperse latex having a particle diameter of 2 µm was obtained.

This latex was used as a starting material for a second swelling and polymerisation step. 28.5 ml of the latex, containing 25 ml of water and 3.5 ml of polystyrene particles, were mixed with an emulsion of 35 ml of water, 4 ml of Perkadox® SE—8 (dioctanoyl peroxide), 3 ml of chlorododecane and 0.2 g of sodium laurylsulfate, which emulsion had been homogenised using the same equipment and under the same conditions as stated above for the earlier swelling step. Further, 10 ml of water and 7 ml of acetone were added under agitation at 25—30°C. After 14 hours the acetone was removed under vacuum. Thereafter 1.2 g of sodium laurylsulfate, 1.0 g Berol® 267 and 930 ml of water were added to a total amount of 1000 ml. 150 ml of distilled styrene and 25 ml of divinyl benzene with 50% active content were added under agitation at 25—30°C and after 3 hours the temperature was increased to 70°C to get a complete polymerisation. The final latex was monodisperse and had a particle diameter of about 7 µm.

### Example 2

The particle from Example 1 were washed and dried. They were then mixed with 800 g 1.5 mm large glass beads, 25 g of carbon and also 20 ml of a mixture of styrene and stearylmethacrylate (70:30) and further 10 ml of methanol. After mixing for 30 minutes all of the carbon had been retained on the surface of the core particles. The glass beads were sieved off and the pigmented particles were dispersed in 800 ml of water containing 5 g of low molecular polyvinyl alcohol having a degree of hydrolysis of 80%.

140 g of stryene, 60 g of butylmethacrylate and 8 g of tertiary butylperoxioctoate (Luperox® 26) were mixed and then emulsified in 800 ml of water containing 5 g of polyvinyl alcohol. The emulsion was then mixed with the dispersion of pigmented particles. After 5 hours all monomer had swelled over to the pigmented particles which under microscope looked like dark-coloured cores surrounded by a circle of liquid. The temperature was raised to 80°C. After 10 hours black particles with a diameter of 9 µm were obtained. After washing the particles were slurried in water and a solution of a colorant of chromium-complex type in methanol was added. The particles were hereby covered with a thin layer of colorant and obtained a suitable charge for copying in a copying machine using a selene-drum and Höganäs-carrier. Copies with very little background and improved resolution, compared with the normal toner, were obtained.

### Example 3

As Example 2 but 25 g of carbon were replaced by 200 g of magnetite (Bayferox® 8600) which had been hydrofobed by treatment with silane. As a final step the toner particles were treated with a solution of nigrosin in methanol and they hereby obtained a suitable charge for copying on a mono-component copying machine with a photo-drum covered with an organic photo-sensitive layer. Copies with good resolution were obtained.

### Example 4

This example relates to the production of monodisperse core particles having a structured composition. According to Example 1 but with the difference that 125 ml of styrene and 50 ml of divinyl benzene with 50% active content were used. After polymerisation for 10 hours at 70°C the temperature was lowered and 100 ml of a 25% emulsion of styrene containing 3% of divinyl benzene were added. Sodium laurylsulfate was used as emulsifier for the emulsion. After 1 hour all of the styrene had been absorbed on the preformed core particles. The temperature was raised to 85°C for 5 hours for polymerisation of the styrene. These core particles were used for the preparation of pigmented particles according to the method of Example 2. The core particles swelled less than those in Example 2 but did, however, satisfactory pick up the pigment.

### Example 5

Example 2 was repeated but the suspension from Example 1 was not dried after the washing but mixed wet with glass beads, carbon, stryene and stearylmethacrylate (without addition of methanol). The additives were picked up on the base particles under agitation and heating to 60°C. Polyvinyl alcohol was added to the dispersion and this was further treated in the same manner as in Example 2 and resulted in toner particles with essentially the same properties.

**Claims**

1. A process for the preparation of toner particles for reprographic applications whereby polymeric base particles are coated with a shell containing a colorant, polymer and an adhesive agent, characterised in that the base particles are coated with the colorant and the adhesive agent which is a difficultly soluble substance, that monomer is added to the base particles when these are dispersed in an aqueous phase, and that the monomer is more soluble in water than the difficultly soluble substance whereby the monomer is introduced to the base particles by migration through the aqueous phase and the monomer and the material in the base particles are selected with regard to each other in such a manner that the base particle has a limited swellability in the monomer or is difficultly soluble in this, whereafter the monomer is polymerised.

2. A process according to claim 1, characterised in that the base particle has been made to have a limited swellability in the monomer by crosslinking.

3. A process according to claim 1, characterised in that the substance which is difficultly soluble is added at the same time as the colorant.

4. A process according to claim 1, characterised in that the initiator is added at the same time as the colorant.

5. A process according to claim 1, characterised in that the colorant is a pigment.

6. A process according to claim 5, characterised in that the pigment has been surface treated for improved dispersibility in monomer and resulting polymer.

7. A process according to claim 6, characterised in that the surface treatment comprises a coating with cross-linked polymer.

8. A process according to claim 7, characterised in that the cross-linked polymer coating comprises long sidebranches.

## Patentansprüche

1. Verfahren zur Herstellung von Tonerteilchen für reprographische Anwendungszwecke, wobei polymere Basisteilchen mit einer Hülle, enthaltend einen Farbstoff, ein Polymeres und ein Klebemittel, umhüllt werden, dadurch gekennzeichnet, daß die Basisteilchen mit dem Farbstoff und dem Klebemittel, das eine schwerlösliche Substanz ist, überzogen werden, daß das Monomere zu den Basisteilchen gegeben wird, wenn diese in wässriger Phase dispergiert sind und daß das Monomere in Wasser löslicher ist als die schwerlösliche Substanz, wodurch das Monomere zu den Basisteilchen durch Wanderung durch die wässrige Phase eingeführt wird das Monomere und das Material in den Basisteilchen im Bezug zueinander derart ausgewählt sind, daß die Basisteilchen eine begrenzte Schwellbarkeit in dem Monomeren haben oder in diesem schwer löslich sind, wonach das Monomere polymerisiert wird.

2. Verfahren gemäß Anspruch 1, dadurch gekennzeichnet, daß das Basisteilchen hergestellt wurde, um eine begrenzte Schwellbarkeit in dem Monomeren durch Vernetzen zu haben.

3. Verfahren gemäß Anspruch 1, dadurch gekennzeichnet, daß die Substanz, welche schwer löslich ist, zur selben Zeit wie der Farbstoff zugesetzt wird.

4. Verfahren gemäß Anspruch 1, dadurch gekennzeichnet, daß der Initiator zur selben Zeit wie der Farbstoff zugesetzt wird.

5. Verfahren gemäß Anspruch 1, dadurch gekennzeichnet, daß der Farbstoff ein Pigment ist.

6. Verfahren gemäß Anspruch 5, dadurch gekennzeichnet, daß das Pigment zur besseren Dispergierbarkeit in dem Monomeren und in dem entstandenen Polymeren oberflächenbehandelt worden ist.

7. Verfahren gemäß Anspruch 6, dadurch gekennzeichnet, daß die Oberflächenbehandlung ein Überziehen mit vernetzten Polymeren umfaßt.

8. Verfahren gemäß Anspruch 7, dadurch gekennzeichnet, daß der vernetzte Polymerüberzug lange Seitenketten enthält.

## Revendications

1. Procédé pour la préparation de particules de toner pour des applications reprographiques, les particules de base polymères étant enrobées d'une capsule contenant un colorant, un polymère et un agent adhésif, caractérisé en ce que les particules de base sont enrobées par le colorant et l'agent adhésif qui est une substance difficilement soluble, qu'un monomère est ajouté aux particules de base lorsque celles-ci sont dispersées dans une phase aqueuse et que le monomère est plus soluble dans l'eau que la substance difficilement soluble, le monomère étant introduit dans les particules de base par migration à travers la phase aqueuse et le monomère et le matériau dans les particules de base étant choisis l'un par rapport à l'autre de telle façon, que la particule de base présente une aptitude limitée au gonflement dans le monomère ou qu'elle soit difficilement soluble dans celui-ci, après quoi le monomère est polymérisé.

2. Procédé selon la revendication 1, caractérisé en ce que la particule de base est traitée de façon à présenter une aptitude au gonflement limitée dans le monomère lors de la réticulation.

3. Procédé selon la revendication 1, caractérisé en ce que la substance difficilement soluble est ajoutée en même temps que le colorant.

4. Procédé selon la revendication 1, caractérisé en ce que l'amorceur est ajouté en même temps que le colorant.

5. Procédé selon la revendication 1, caractérisé en ce que le colorant est un pigment.

6. Procédé selon la revendication 5, caractérisé en ce que le pigment a subi un traitement de surface pour améliorer la dispersibilité dans le monomère et le polymère résultant.

7. Procédé selon la revendication 6, caractérisé en ce que le traitement de surface comprend un revêtement par le polymère réticulé.

8. Procédé selon la revendication 7, caractérisé en ce que le revêtement de polymère réticulé comprend des ramifications à longue chaîne.